Europäisches Patentamt

European Patent Office

Office européen des brevets

(19)

(11) Numéro de publication : **0 410 869 B1**

# (12) FASCICULE DE BREVET EUROPEEN

(45) Date de publication du fascicule du brevet :
**28.06.95 Bulletin 95/26**

(51) Int. Cl.$^6$ : **H04L 9/06**

(21) Numéro de dépôt : **90402125.0**

(22) Date de dépôt : **24.07.90**

(54) **Procédé de traitement de données par compression et permutation pour carte à microcircuit.**

(30) Priorité : **25.07.89 FR 8910004**

(43) Date de publication de la demande :
**30.01.91 Bulletin 91/05**

(45) Mention de la délivrance du brevet :
**28.06.95 Bulletin 95/26**

(84) Etats contractants désignés :
**DE FR GB IT SE**

(56) Documents cités :
**IBM TECHNICAL DISCLOSURE BULLETIN,
vol. 29, no. 12, mai 1987, pages 5594-5595, New
York, US ; "Software data encryption standard"
COMPUTER DESIGN, vol. 19, no. 6, juin 1980,
pages 158-164 ; MOMIROV : "LSI implementation of the data encryption standard"**

(73) Titulaire : **TRT TELECOMMUNICATIONS
RADIOELECTRIQUES ET TELEPHONIQUES
88 rue Brillat Savarin
F-75013 Paris (FR)**
(84) **FR**
Titulaire : **Philips Electronics N.V.
Groenewoudseweg 1
NL-5621 BA Eindhoven (NL)**
(84) **DE GB IT SE**

(72) Inventeur : **Quisquater, Jean-Jacques
SOCIETE CIVILE S.P.I.D.,
156 Bd Haussmann
F-75008 Paris (FR)**
Inventeur : **Leterrier, Benoît
SOCIETE CIVILE S.P.I.D.,
156 Bd Haussmann
F-75008 Paris (FR)**
Inventeur : **Delaporte, Xavier
SOCIETE CIVILE S.P.I.D.,
156 Bd Haussmann
F-75008 Paris (FR)**

(74) Mandataire : **Chaffraix, Jean et al
Société Civile S.P.I.D.
156, Boulevard Haussmann
F-75008 Paris (FR)**

EP 0 410 869 B1

Jouve, 18, rue Saint-Denis, 75001 PARIS

## Description

La présente invention concerne un procédé de traitement de données protégées par chiffrement pour carte à microcircuit, le chiffrement étant opéré par une suite de transformations de données en entrée utilisant une clé secrète, les transformations comportant de manière générale des permutations de bits, des décalages ou rotations, des sommes binaires modulo 2, des compressions et des expansions de mots, et en particulier, une étape de transformation SP regroupant une permutation P et une transformation de compression S, elle-même divisée en n transformations de compression Si permettant chacune d'associer à un mot binaire d'entrée de longueur p un mot binaire de sortie de longueur q, et définie chacune par une table de correspondance Ti de $2^p$ valeurs, cette transformation SP utilisant une unique table de correspondance T qui regroupe les tables Ti.

Un tel procédé de traitement de données protégées par chiffrement est décrit dans la publication "Federal Information Processing Standards Publication" (FIPS PUB 46) du 15 janvier 1977, du Bureau National des Standards du Ministère du Commerce américain. Lorsqu'un tel traitement est appliqué aux données utilisées dans une carte à microcircuit, celui-ci doit être le plus rapide et également le plus compact possible, la taille de code admissible dans une carte à microcircuit étant des plus limitées. Or une des étapes du chiffrement, étape qui sera appelée dès à présent "étape SP", consiste en une transformation de compression S par tables de correspondance ("look-up tables") appelées Ti suivie d'une permutation P irrégulière.

De manière habituelle, la compression S et la permutation P se traitent séquentiellement, (la permutation P étant appliquée au résultat de la compression S), ce qui a pour effet de nécessiter d'une part un temps de traitement prohibitif et d'autre part de requérir une taille de code excessive et donc une occupation mémoire exagérée. En effet, le procédé classique de traitement de permutation de bits, de quelque type qu'il soit, est de prendre chaque bit du mot en entrée, d'en calculer la position dans le mot de sortie (généralement par l'intermédiaire d'une table lorsque la permutation est totalement irrégulière, tel le cas qui nous concerne) et d'y positionner la valeur du bit considéré. Ce traitement se faisant bit à bit, il est évident que le coût de ce procédé est proportionnel au nombre de bits à permuter. Pour ce qui est du traitement de la transformation de compression S, le mot d'entrée est décomposé en mots élémentaires Wi utilisés comme index dans les tables Ti, celles-ci fournissant (après concaténation des différentes valeurs enregistrées dans les tables Ti) le mot de sortie.

L'article "Software Data Encryption Standard" publié dans la revue "IBM Technical Disclosure Bulletin" volume 29, n°12, pages 5594 et 5595, du mois de mai 1987, décrit un procédé qui permet de remédier à cet inconvénient dans certains cas.

Ce procédé consiste d'une part à appliquer une transformation SP regroupant la transformation de compression S et la permutation P, cette transformation SP utilisant une unique table formée à partir des tables Ti. Cette table comporte 512 lignes de 32 bits, de telle sorte que 64 lignes sont attribuées à chaque transformation de compression Si. Chacune de ces 64 lignes contient 4 bits significatifs qui codent la valeur associée à l'un des 64 mots binaires d'entrée par la transformation de compression Si. Ainsi, cette table nécessite 2koctets pour son enregistrement.

Ce procédé n'est donc pas applicable sur les cartes à microcircuit protégées par chiffrement utilisant un traitement DES. Dans ce cas, en effet, la taille de mémoire morte disponible pour un tel traitement ne dépasse pas 1koctet.

La présente invention propose un procédé du genre précité mais qui ne présente pas les inconvénients du procédé connu, et de manière très sensible autorise à un meilleur rapport vitesse de traitement sur occupation mémoire.

Pour cela le procédé de traitement de données protégées par chiffrement, du genre mentionné dans le préambule est remarquable en ce que, à chacun des $2^p$ mots binaires d'entrée correspond une ligne dans la table T, qui contient les n mots binaires de sortie associés au dit mot binaire d'entrée par chacune des transformations de compression Si,
et en ce qu'il dispose d'un système de masquage et de sommation qui associe un masque Mi à chaque transformation de compression Si, chaque mot binaire de sortie de la transformation de compression S étant ainsi obtenu par sommation de n mots binaires intermédiaires obtenus par application du masque Mi à la ligne de la table T désignée par chacun des n mots binaires d'entrée.

Ainsi, une réorganisation des tables de correspondance de la transformation de compression S, en combinaison avec un système de masquage associé, permet de réduire la taille de la table, qui en reprenant l'exemple de l'article précité, ne nécessite plus que 256 octets.

Ce procédé est particulièrement bien adapté au traitement de l'étape SP de la transformation de compression S et de la permutation P effectuées pour une carte à microcircuit utilisant le procédé de traitement de données protégées par chiffrement DES (Data Encryption Standard).

Dans ce type de carte utilisant un microprocesseur 8 bits par exemple du type 6805 de chez Motorola ou 8048 de chez Intel, il est nécessaire pour traiter des mots de taille supérieure à 8 bits d'effectuer plusieurs fois la même opération.

En outre, et de manière générale, dans ce type de traitement, pour des mots de 64 bits, seul 48 bits sont significatifs, ces 48 bits devant être réduits à 32 bits lors de l'opération de compression S. Cette opération de transformation de compression S est, pour des raisons pratiques, divisée en plusieurs sous-opérations, par exemple 8, de compression (S1 à S8) chacune permettant une réduction de 6 bits à l'entrée (6x8 = 48 bits) à 4 bits en sortie (4x8 = 32 bits).

Dans ce contexte, une partie de l'invention a consisté à montrer qu'il était possible de réorganiser les tables Ti ($T_1$ à $T_8$) associées à chacune des 8 compressions élémentaires ($S_1$ à $S_8$) en une seule table T qui, associée à un procédé de masquage et de sommation, permettra après recalcul des éléments de la table T et des masques associés, d'obtenir en sortie de la nouvelle transformation de compression (appelée dans la suite S′) un résultat identique à celui qui aurait été obtenu si, comme dans l'art antérieur, la permutation P avait été effectuée après la transformation de compression S.

Afin de mieux appréhender l'invention une démonstration mathématique simple peut être utilisée pour mettre en évidence l'identité des résultats obtenus quant à leur justesse avant ou après application de l'idée de l'invention, tout en conservant en mémoire qu'après application de l'invention le temps de traitement et la taille de code requise sont très sensiblement réduits.

Selon l'art antérieur l'étape de transformation SP est réalisée en deux temps. Un premier temps pendant lequel est réalisée la transformation de compression S suivie d'un second temps pour effectuer la permutation P.

Comme cela a été vu précédemment, la compression S est décomposée en huit compressions élémentaires (S1 à S8). Chaque compression élémentaire Si permet de transformer un nombre codé sur 6 bits en un autre codé sur 4 bits, la valeur d'entrée (6 bits) étant permutée de façon à fournir un index de scrutation de la table de correspondance Ti, table qui est destinée à fournir la valeur de sortie (4 bits). Chaque table Ti est donc constituée de 2 puissance 6 valeurs codées sur 4 bits, soit pour l'ensemble des 8 compressions élémentaires S1 à S8 de 64x4x8 bits soit 256 octets. La sortie de la compression S est alors obtenue par concaténation des 8 valeurs de sortie des compressions Si, le résultat étant fourni sur 32 bits. L'ensemble est alors permuté lors de l'opération de permutation P pour fournir le résultat final.

L'idée de l'invention consiste à ne pas considérer 8 tables Ti indépendantes mais une seule table T constituée de 2 puissance 6 mots de 32 bits, les valeurs étant rangées à raison de 4 octets par ligne d'enregistrement résultant de la concaténation des 8 sorties des opérations S1 à S8 (soit, les 8 valeurs codées sur 4 bits des anciennes tables Ti pour la ligne d'enregistrement considérée), en effet selon le numéro de l'opération Si, le quartet significatif n'est pas le même.

Chaque valeur de 6 bits en entrée correspond à un index dans la table d'enregistrement T, index qui pointe donc sur un mot de 32 bits (si l'entrée vaut i, c'est le i-ème enregistrement qui sera adressé), ceci étant valable quelque soit le numéro de l'opération Si concernée. Pour ne garder que les bits significatifs pour chaque opération Si, il suffit alors de masquer les résultats intermédiaires avec le masque adéquat (ce qui permet de forcer à zéro les bits non significatifs pour l'opération Si). Huit masques sont donc nécessaires, un par opération Si. Le résultat final de la transformation de compression S sera alors obtenu en sommant les 8 résultats intermédiaires masqués (puisque le zéro est élément neutre pour l'addition).

Dans le cas de la seule transformation de compression S, les masques à réaliser sont évidents à calculer puisqu'ils correspondent chacun au quartet significatif du registre de sortie pour chaque opération Si.

Soit Ii l'entrée i et Oi la sortie correspondante de la transformation de compression élémentaire Si, soit Mi le i-ème masque correspondant à la compression élémentaire Si et ainsi la relation :

$$Oi = Mi (Si (Ii))$$

Le résultat final de la transformation de compression S est alors défini par :

$$S = \Sigma Oi = \Sigma Mi (Si (Ii))$$

Après application de la permutation P, le résultat de la transformation SP sera alors :

$$SP = P [\Sigma Mi (Si (Ii))$$

A présent et selon l'invention, effectuons une même approche mathématique dans le cas où la permutation P est intégré au traitement de la transformation de compression S, le traitement de base étant identique mais chaque enregistrement de la table T étant préalablement P permuté. Les masques étant eux aussi P permutés pour la récupération en sortie des 32 bits aux bons emplacements. En effet, les 4 bits significatifs à récupérer lors d'une opération S′i ne sont plus quatre à quatre consécutifs comme dans le traitement de la transformation de compression S mais déjà P permutés.

Ainsi si Mi est le i-ème masque, le nouveau masque sera donc M′i et ainsi la relation :

$$M′i = P(Mi)$$

La relation SP devient donc :

$$SP = S \circ P$$
$$= (\Sigma Si \circ Mi) \circ P$$

Comme P est une bijection, puisque pour chaque bit en entrée correspond un seul bit en sortie et inversement, il est donc évident que :

$$SP = \Sigma(Si \circ P) \circ (Mi \circ P)$$
$$= \Sigma S′i \circ M′i$$
$$= S′$$

Ainsi S′ = SP et les deux procédés sont bien équivalents avec un avantage très significatif pour le procédé de l'invention qui permet de faire disparaître le traitement de la permutation P autorisant ainsi une exécution plus rapide et un gain en code par rapport au procédé de l'art antérieur, pour lequel le traitement de la permutation P suit le traitement de la transformation de compression S.

Par ailleurs, selon une variante le procédé de traitement de la transformation de compression S′ conforme a l'invention est remarquable en ce qu'il peut être appliqué d'une façon similaire à la réalisation de toute permutation d'un nombre quelconque de bits. Il suffit en effet d'appliquer l'invention au traitement de la fonction identité Id (qui est une compression de type S d'un genre particulier) et de remarquer que S′= P(S) = P(Id) = P. Selon l'invention, il est donc possible de traiter les permutations par tables de correspondance ("look-up tables") et masquage. Ce type de traitement est particulièrement bien adapté à la réalisation de permutations sur des processeurs 16 et 32 bits (où les opérations de chargement des résultats intermédiaires, masquage et sommation peuvent se faire en un nombre très réduit d'instructions, voire une seule).

L'exemple suivant, non limitatif, permettra de bien comprendre comment l'invention peut être réalisée.

Soit $I_1$, une entrée de la transformation de compression $S_1$, avec $I_1$ = 00011101, après une opération de permutation des bits de $I_1$ selon l'algorithme DES, il sera obtenu un index IN égal à 3C (hexadécimal) soit 60 en décimal, la sortie de la transformation de compression $S_1$ sera alors $O_1(60)$ = 0101.

Une fois les 8 entrées $I_1$ à $I_8$ compressées, il reste à permuter l'ensemble par l'intermédiaire de la permutation P. Cette dernière est une permutation sur 32 bits et était, dans l'art antérieur, traitée séparément.

Selon le procédé de l'invention la transformation de compression S et la permutation P sont regroupées en une seule opération.

La première étape du procédé consiste alors à calculer une nouvelle table de l'opération de la transformation de compression S′ telle que toutes les lignes d'entrée de S′ soient permutées entre elles, de façon à correspondre séquentiellement aux octets d'entrée de la table d'enregistrement de la transformation de compression S, ceci évite en particulier d'avoir à permuter les bits de $I_1$, l'index IN correspondant alors directement à la valeur d'entrée dans la transformation de compression S.

Ainsi pour $I_1$ = 00011101, le procédé selon l'invention donne après application du masquage à la sortie O′ : O′(1D) = 0101 0000 0000 0000 0000 0000 0000 0000

La deuxième étape du procédé consiste à intégrer la permutation P à la transformation de compression S. Pour ce faire, il faut savoir qu'il y a 256 valeurs dans la table d'enregistrement de S. En effet, il y a 8 entrées de 6 bits qui fournissent chacune après compression et permutation une sortie sur 4 bits. Il y a donc $2^6$x8 valeurs possibles sur 4 bits donc 512 quartets ou 256 octets pour l'ensemble des 8 tables

d'enregistrement $T_1$ à $T_8$.

La nouvelle table sera construite de la manière suivante. Pour chacune des 64 valeurs possibles, il est affecté une valeur sur 32 bits constituée des 8 anciens quartets des tables d'enregistrement Ti, tous les cas sont ainsi englobés. Ces valeurs sont alors P permutées afin de constituer la table d'enregistrement S′ finale.

Lors d'une transformation de compression, tous les bits obtenus ne sont pas significatifs ; dans ce cas la récupération des bits utiles se fait par masquage des bits non significatifs. Pour cela il est nécessaire de disposer d'un autre système de masques M, défini en fonction de la permutation à réaliser. Il y a autant de masques dans ce système M que de blocs dans le message à permuter, dans le cas présent il y en a donc 8.

Le mode de réalisation préféré selon l'invention est l'application de l'étape de transformation SP dans le système DES utilisé très couramment pour les cartes à microcircuit. En effet l'application du procédé est parfaitement adaptée à la réalisation de cette étape, S étant une compression de 48 bits à 32 bits mélangés, tandis que P est une simple permutation de 32 bits. Il est donc possible et avantageux d'intégrer la permutation P à la transformation de compression S puisque cette dernière comprend également une permutation de 32 bits. Les valeurs précédentes de S sont aussi directement P permutées et ainsi se trouvent automatiquement aux emplacements prédéterminés. La sortie pour un octet est un mot de 32 bits dont seuls 4 sont significatifs. Il convient donc de masquer les bits non significatifs pour obtenir les 4 bits désirés bien placés dans le message de sortie. Le résultat final est donc codé sur 4x8 = 32 bits, soient 4 octets.

De manière spécifique pour une application utilisant un microprocesseur 8 bits avec un système DES, le procédé peut se résumer aux trois étapes suivantes :

- aller chercher en 4 fois dans la table d'enregistrement S les 32 bits résultants,
- masquer également en 4 fois ce résultat en fonction du système de masquage recalculé,
- effectuer un OU exclusif (somme binaire modulo 2) avec les 32 bits résiduels du système DES.

En effet les opérations sont multipliées par 4 si le codage est réalisé à partir d'un microprocesseur 8 bits du type précité (6805 ou 8048).

## Revendications

1. Procédé de traitement de données protégées par chiffrement pour carte à microcircuit, le chiffrement étant opéré par une suite de transformations de données en entrée utilisant une clé secrète, les transformations comportant de manière générale des permutations de bits, des décalages ou rotations, des sommes binaires modulo 2, des compressions et des expansions de mots, et en particulier, une étape de transformation SP regroupant une permutation P et une transformation de compression S, elle-même divisée en n transformations de compression Si permettant chacune d'associer à un mot binaire d'entrée de longueur p un mot binaire de sortie de longueur q, et définie chacune par une table de correspondance Ti de $2^p$ valeurs, cette transformation SP utilisant une unique table de correspondance T qui regroupe les tables Ti, caractérisé en ce que, à chacun des $2^p$ mots binaires d'entrée correspond une ligne dans la table T, qui contient les n mots binaires de sortie associés au dit mot binaire d'entrée par chacune des transformations de compression Si,

et en ce qu'il dispose d'un système de masquage et de sommation qui associe un masque Mi à chaque transformation de compression Si, chaque mot binaire de sortie de la transformation de compression S étant ainsi obtenu par sommation de n mots binaires intermédiaires obtenus par application du masque Mi à la ligne de la table T désignée par chacun des n mots binaires d'entrée.

2. Procédé de traitement de données protégées par chiffrement selon la revendication 1, caractérisé en ce que les lignes de la table T, qui sont adressées par les $2^p$ mots binaires d'entrée, sont permutées entre elles de façon à ordonner la table T par adresses soit croissantes soit décroissantes, pour accéder directement à l'information.

3. Procédé de traitement de données protégées par chiffrement selon l'une des revendications 1 ou 2, caractérisé en ce qu'il est directement applicable à la réalisation de toute permutation d'un nombre quelconque de bits, la fonction identité (cas particulier d'une transformation de compression) étant alors substituée à la transformation de compression S.

4. Carte à microcircuit protégée par chiffrement utilisant le procédé de traitement de données DES, et disposant d'un ensemble à microprocesseur qui comporte une mémoire morte contenant en outre des instructions permettant de mettre en oeuvre le procédé selon l'une des revendications 1 à 3.

**Patentansprüche**

1. Verfahren zur Verarbeitung von durch Verschlüsselung geschützten Daten für eine Mikrochip-Karte, wobei die Verschlüsselung durch eine Folge von Umformungen von Eingabedaten unter Verwendung eines geheimen Schlüssels erfolgt, wobei die Umformungen in allgemeiner Weise Vertauschungen von Bits umfassen sowie Verschiebungen oder Rotationen, binäre Modulo-2-Summen, Kompressionen und Expansionen von Wörtern und im besonderen einen Umformungsschritt SP mit einer Vertauschung P und einer Kompressionsumformung S, die selbst in n Kompressionsumformungen Si unterteilt ist, von denen jede es ermöglicht, einem binären Eingabewort mit einer Länge p ein binäres Ausgabewort mit einer Länge q zuzuordnen, und von denen jede durch eine Verweistabelle Ti mit $2^p$ Werten definiert ist, wobei diese Umformung SP eine einzelne Verweistabelle T verwendet, die die Tabel-len Ti umfaßt, <u>dadurch</u> <u>gekennzeichnet</u>, daß je-dem der $2^p$ binären Eingabewörter eine Zeile in der Tabelle T entspricht, die die n binären Ausgabewörter enthält, die dem genannten binären Ein-gabewort durch jede der Kompressionsumfor-mungen Si zugeordnet worden sind, und daß es über ein Maskierungs- und Summierungssystem verfügt, das jeder Kompressionsumformung Si eine Maske Mi zuordnet, wobei jedes binäre Ausgabewort der Kompressionsumformung S so durch Summierung der n binären Zwischenwörter erhalten wird, die durch Anwendung der Maske Mi auf die durch jedes der n binären Eingabewörter bestimmten Zeile der Tabelle T erhalten werden.

2. Verfahren zur Verarbeitung von durch Verschlüsselung geschützten Daten nach Anspruch 1, <u>da-durch gekennzeichnet</u>, daß die Zeilen der Tabelle T, die durch die $2^p$ Eingabewörter adressiert werden, untereinander so vertauscht werden, daß sie die Tabelle T mittels steigender oder absteigender Adressen bestimmen, um direkt auf die Information zuzugreifen.

3. Verfahren zur Verarbeitung von durch Verschlüsselung geschützter Daten nach einem der An-sprüche 1 bis 2, <u>dadurch gekennzeichnet</u>, daß es direkt anwendbar ist auf eine Durchführung jeder Vertauschung einer beliebigen Anzahl Bits, wobei die Identitätsfunktion (besonderer Fall einer Kompressionsumformung) dann an die Stelle der Kompressionsumformung S gesetzt wird.

4. Mikrochip-Karte, die durch Verschlüsselung un-ter Verwendung des Datenverarbeitungsverfah-rens DES geschützt ist und über eine Mikropro-zessoreinheit verfügt, die einen Festwertspei-cher umfaßt, der unter anderem Befehle enthält, die die Ausführung des Verfahrens nach einem der Ansprüche 1 bis 3 ermöglichen.

## Claims

1. A method of processing data protected by encryption for a microcircuit card, encryption being performed by a succession of transformations of the input data utilizing a secret key, the transformations comprising, in a general manner, permutations of bits, shifts or rotations, binary modulo-2 sums, compressions and expansions of words, and more particularly a transformation step SP in which a permutation P and a compression transformation S are regrouped, said compression transformation itself being subdivided into n compression transformations Si, each of which enables a binary output word of length q to be associated with a binary input word of length p and is defined by a respective look-up table Ti with $2^p$ values, said transformation SP utilizing a single look-up table which regroups the tables Ti, characterized in that each of the $2^p$ binary input words corresponds to a line in the table T which contains the n binary the n binary output words associated with said binary input word by each of the compression transformations Si, and in that it utilizes a masking and summing system which associates a mask Mi with each compression transformation Si, each binary output word of the compression transformation S thus being obtained by summing n intermediate binary words obtained by application of the mask Mi to the line in the table T designated by each of the n binary input words.

2. A method of processing data protected by encryption as claimed in Claim 1, characterized in that the lines of the table T, being addressed by the $2^p$ binary input words, are permuted relative to one another in order to arrange the table T according to ascending or descending addresses for direct information access.

3. A method of processing data protected by encryption as claimed in Claim 1 or 2, characterized in that it can be applied directly for the execution of any permutation of an arbitrary number of bits, the identify function (special case of a compression transformation) then being substituted for the compression transformation S.

4. A microcircuit card protected by encryption utilizing the DES data processing method and having at its disposal a microprocessor assembly which comprises a read-only memory which also stores instructions enabling the execution of the method claimed in any one of the Claims 1 to 3.